# EUROPÄISCHE PATENTSCHRIFT

(11) **EP 0 475 241 B1**
(45) Veröffentlichungstag und Bekanntmachung des Hinweises auf die Patenterteilung: **07.01.1998**
(21) Anmeldenummer: 91114814.6
(22) Anmeldetag: 03.09.1991
(51) Int. Cl.: A01D 75/18

(54) **Mit Umlenk- und/oder Abweisrollen versehene Mähvorrichtung**
Mowing device equipped with guiding and/or deflecting rollers
Dispositif facheur muni de galets directeurs et/ou de déviation

(30) Priorität: 12.09.1990 DE 4028911; 17.04.1991 DE 4112523
(43) Veröffentlichungstag der Anmeldung: 18.03.1992
(73) Patentinhaber: Maschinen-Mohr Inh.: Dipl.-Ing. Peter Wicke, 91792 Ellingen (DE)
(72) Erfinder: Mohr, Hermann, W-8836 Ellingen (DE)
(74) Vertreter: Matschkur, Götz, Lindner Patent- und Rechtsanwälte

(56) Entgegenhaltungen:
- EP-A- 0 211 785
- EP-A- 0 476 419
- US-A- 2 960 811
- US-A- 4 079 960
- US-A- 4 672 799

## Beschreibung

Die Erfindung betriffte eine Mähvorrichtung, insbesondere einen Sichelmäher, der an ein Fahrzeug ankuppelbar ist und ein das Schneidwerk umgebendes Chassis aufweist nach dem Oberbegriff des Anspruchs 1. Ein derartiger Mäher ist bereits aus der US-A-4079960 bekannt.

Beim Fahrbetrieb derartiger bekannter Mähwerke zur Landschaftspflege werden Hindernisse (größere Steinbrocken, Baumstümpfe etc.), die in der zu mähenden Landschaft verborgen liegen, oft nicht rechtzeitig erkannt. Dann können beim Anfahren des Hindernisses starke Stöße auf das Mähwerk entstehen, die sich auf die Aufhängung und den Rüstbock des Fahrzeugs übertragen. Vor allem bei nicht-elastischer starrer Ankopplung des Mähwerks an das Fahrzeug können diese Stöße Verformungen, Verbiegungen und mithin beträchtliche Schäden beim Mähwerk-Gehäuse bzw. Tragrahmen (Chassis), beim Ankopplungsgerät oder bei der Dreipunktaufhängung bzw. dem Rüstbock verursachen.

Mithin wird das der Erfindung zugrundeliegende Problem aufgeworfen, beim Betrieb von fahrbaren Mähwerken die Sicherheit und Funktionszuverlässigkeit unter Verwendung einer einfachen und billig herstellbaren Konstruktionsweise zu erhöhen, die es erlaubt, daß insbesondere auch beim Mähvorgang augefahrene Bäume oder dgl. geschont werden. Dies wird bei einer Mähvorrichtung der eingangs genannten Art durch das Kennzeichen des Anspruchs 1 gelöst.

Die in, entgegengesetzt und/oder quer zur Fahrtrichtung vorspringenden rundlichen Körper sind gegenüber den Außenseiten der Mähvorrichtung bzw. deren Chassis durch Berührung mit externen Objekten auf diesen abrollbar bzw. abwälzbar; dabei werden den Rollkörpern relativ zum Mähvorrichtungschassis Drehungen um Achsen schräg oder senkrecht zum Boden erteilt. Vor allem bei senkrecht zum Boden verlaufenden Rollachsen können die erfindungsgemäßen Rollkörper plötzlich entstehende Seitendrücke und -stöße, die von angefahrenen Hindernissen herrühren, aufnehmen, ablenken und in Ausweichbewegungen für die Mähvorrichtung bzw. das angekuppelte Fahrzeug umsetzen. Wichtig ist dabei, daß die gekrümmten Flächen der Rollkörper die plötzlich entgegenstehenden externen Hindernisse in Punkten oder Flächen tangieren, die außerhalb der seitlichen Begrenzungen der Mähvorrichtung bzw. von deren Chassis liegen.

Die Rollkörper sind als Räder mit Felgen ausgeführt, die von gegebenenfalls luftgefüllten Gummireifen umgeben sind. Vor allem wenn diese Räder an der in Fahrtrichtung gesehenen Frontseite des Chassis angebracht sind, können sie beim Auftreffen auf ein Hindernis als Umlenkrollen dienen, indem sie sich auf dem Hindernis abrollen, die dabei entstehende Stoßkraft auf das Mähvorrichtungschassis übertragen und möglicherweise diesen so eine geänderte (Ausweich-)Fahrtrichtung erteilen. Zudem führt die Gummi-Ummantelung - gegebenenfalls gasgefedert - für diese Umlenkräder zu einer elastischen Dämpfung und Kompensation der vom angefahrenen Hindernis ausgeübten Stöße und Kräfte.

Darüber hinaus ist nach der vorliegenden Erfindung die Mähvorrichtung mit einem oder mehreren auf dem Boden rollenden Rädern (mit horizontalen Drehachsen) versehen, die um Achsen verschwenkbar sind, die entsprechend den Rollkörper-Drehachsen zum Boden gerichtet verlaufen. Der erzielte Vorteil besteht darin, daß beim Auftreffen und Abwälzen der Rollkörper auf einem externen Hindernis die Bodenräder um ihre zum Boden gerichtete Längsachse verschwenkt bzw. verstellt werden können, so daß eine (ausweichende) Fahrtrichtungsänderung für die fahrbare Mähvorrichtung bzw. deren Trägerfahrzeug erzielt wird. In diesem Zusammenhang entsteht eine zweckmäßige Konstruktion darin, daß diese lenkbaren Bodenräder an den oben genannten Auslegerabschnitten lenkbar gelagert bzw. aufgehängt sind, so daß ihre Verschwenk- bzw. Umlenkachse den jeweiligen Ausleger durchsetzt und insbesondere mit der Drehachse des darauf befindlichen Rollkörpers in einer gemeinsamen Flucht verläuft.

In anderer Ausbildung der Erfindung weisen die Rollkörper die Form von Walzen bzw. länglichen Zylindern auf, wobei fester oder elastischer Kunststoff als Herstellungsmaterial verwendet wird. In dieser Ausführung eignen sich die Rollkörper besonders zum Abweisen von Hindernisstößen, deren Kraftkomponenten im wesentlichen quer zur Fahrtrichtung gerichtet sind. Infolgedessen ist es zweckmäßig, derartige Abweisrollen oder -walzen so anzuordnen, daß ihre beim Abrollen auf externen Hindernissen gebildeten Tangentialflächen den Chassis-Außenseiten gegenüberliegen, die parallel zur Fahrtrichtung verlaufen.

Zum drehbaren Anbringen der Rollkörper an den Chassis-Außenseiten der Mähvorrichtung besteht eine vorteilhafte konstruktive Ausgestaltung der Erfindung darin, am oder im Chassis Trägerarme mit über die Chassis-Außenseiten hinausragenden Auslegerabschnitten auszubilden, welche Drehlager mit senkrecht zum Boden gerichteten Gelenkachsen für die Rollkörper aufweisen. Mit diesen auskragenden Trägerarmen können einerseits die externen Hindernisse früh und rechtzeitig abgetastet werden und andererseits Änderungen und Ausweichbewegungen für die Fahrtrichtung der Mähvorrichtung herbeigeführt werden.

Eine alternative Anbringungsmöglichkeit für die Rollkörper besteht in der Form von Stoßstangen und/oder gefedert angebrachten Rammbügeln (vgl. diesseitige Patentanmeldung DE-A 40 28 778 vom 11.09.1990 sowie EP-A-476419), die jeweils an einer Außenseite des Mähwerks befestigt sind. In konstruktiver Weiterbildung der Erfindung sind dann auf der Stoßstange oder dem Rammbügel senkrecht nach oben ragende Stifte aufgesetzt, welche die für die Rollkörper erfindungsspezifischen, d. h. zum Boden gerichteten Drehachsen bilden. Diese erfindungsgemäß schräg oder senkrecht zum Boden verlaufenden Drehachsen ermöglichen die Aufnahme von Seitendrücken, die von externen Hindernissen verursacht sind.

Eine weitere Möglichkeit zur Anbringung der Rollkörper besteht darin, von einer Außenseite des Chassis aus eine oder mehrere Konsolen vorspringend auszubilden, welche - vorzugsweise in Paaren einander zugeordnet - einen Rollkörper tragen. Dabei ist es zweckmäßig, daß im Falle einer paarweisen Anordnung die Konsolen übereinander mit einer gemeinsamen vertikalen Flucht angeordnet sind, so daß sie von der Drehachse des Rollkörpers gemeinsam durchsetzt sind. In konstruktiver Ausgestaltung ist dann an den freien Enden der Konsolen ein Achsstift vertikal bzw. senkrecht zum Boden geführt, um den die Rollkörper drehbar gelagert sind.

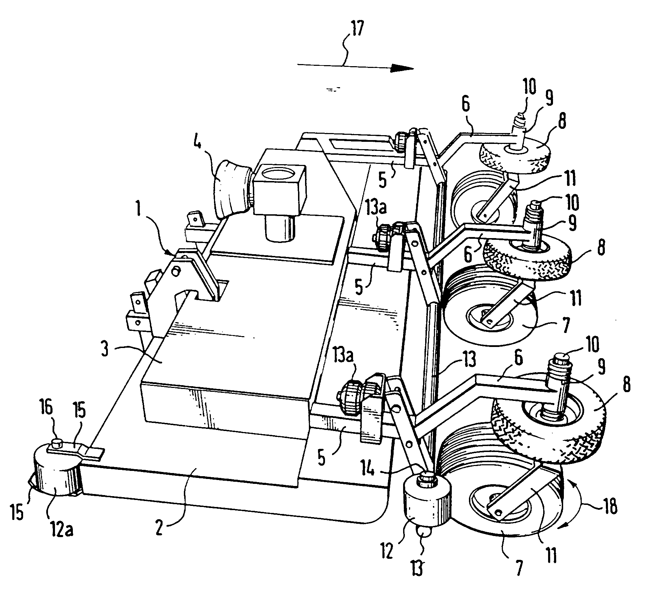

Weitere Einzelheiten, Vorteile und Merkmale auf der Basis der Erfindung ergeben sich aus der nachfolgenden Beschreibung eines bevorzugten Ausführungsbeispiels der Erfindung sowie anhand der Zeichnung. Diese zeigt von seitlich oben in perspektiver Darstellung eine erfindungsgemäße Mähmaschine:

Diese weist an ihrer Rückseite ein Kupplungsgerät 1 zum Anbringen an die gegebenenfalls hydraulisch heb- und senkbare Dreipunktaufhängung eines Nutzfahrzeugs auf. Auf dem das Schneid-, insbesondere Sichelmähwerk abdeckend umgebenden Rahmengehäuse bzw. Chassis 2 ist ein Antriebsgehäuse 3 für das darin befindliche Antriebsaggregat aufgesetzt. Das Antriebsgehäuse 3 trägt auf seiner Oberseite einen Wellenanschluß 4 für eine Verbindungswelle zu einem (nicht gezeichneten) Fahrzeug. Im - in Fahrtrichtung 17 gesehen - Frontbereich des Chassis 2 und/oder des Antriebsgehäuses 3 sind gemäß gezeichnetem Beispiel drei Träger 5 ortsfest fixiert. Sie besitzen jeweils in Fahrtrichtung 17 vorspringende Auslegerabschnitte 6. An den freien Enden der Auslegerabschnitte 6 sind sowohl Bodenräder 7 zum Verfahren der Mähvorrichtung über die Landschaft als auch Umlenkräder 8 drehbar gelagert. Als Lagermittel für die Umlenkräder 8 dient jeweils eine Lagerbuchse 9, welche in ihrem Inneren von einem Drehzapfen 10 durchsetzt ist. Dieser ist senkrecht zum Boden gerichtet, so daß für die Umlenkrollen 8 jeweils eine vertikale Drehachse realisiert ist. Zudem sind die Umlenkrollen 8 nach Art von Fahrzeugrädern mit Felgen umgebenden luftgefüllten Reifen ausgeführt, welche beim Stoßen auf ein externes Hindernis eine elastische Abfederung und Dämpfung bewirken. Treffen die Umlenkräder 8 mit gegenüber der Fahrtrichtung 17 schräg abweichender Richtung auf ein externes Hindernis, setzen sie gegebenenfalls den Auftreffstoß in eine die Fahrtrichtung 17 für die Mähvorrichtung ändernde Kraft um. Dabei kann die Mähmaschine nebst dem über das Kupplungsgerät 1 angekuppelten Fahrzeug in eine vor dem Hindernis ausweichende Fahrtrichtung gelenkt werden.

Diese Wirkung wird noch durch die Kombination mit den Bodenrädern 7 erhöht: Diese sind zum Rollen in Fahrtrichtung 17 in jeweiligen Gabelaufhängungen 11 gelagert, welche den Bodenrädern 7 zum einen Drehachsen parallel zum Landschaftsboden zur Ermöglichung der Vorwärtsfahrt realisieren; zum anderen ist die Gabelaufhängung 11 selbst um eine vertikale Achse parallel und/oder in einer gemeinsamen Flucht mit dem Drehzapfen 10 bzw. der Drehachse der Umlenkräder-Lagerbuchsen 9 drehbar. Stoßen und wälzen sich die Umlenkräder 8 auf einem externen Hindernis, wird den mit ihnen in Wirkungsverbindung stehenden Bodenrädern 7 eine Änderung ihrer Roll- und Fahrtrichtung 17 dadurch erteilt, daß die Stoßkraft in eine Drehung bzw. Verschwenkung der jeweiligen Gabelaufhängung 11 um die durch den Drehzapfen 10 realisierte Achse umgesetzt wird.

An das Chassis 2 der Mähvorrichtung sind ferner Abweisrollen 12,12a angebracht, die bevorzugt massiv aus Kunststoff hergestellt sind. Als Ort der Anbringung dient zum einen ein Rammbügel 13, der sich entlang der Frontseite zwischen den Bodenrädern 7 und dem Chassis 2 erstreckt (vgl. Patentanmeldung P 40 28 778.5). Er ist an den Trägern bzw. Auslegern 5, 6 über Doppelarm-Hebel angelenkt und über Gummihohlfedern 13a relativ zum Chassis 2 federgepuffert verschenkbar. Gemäß gezeichnetem Beispiel ist das Ende des Rammbügels 13 als Lagerort für die Abweisrolle 12 vorgesehen, indem dort ein nach oben ragender Drehstift 14 ausgebildet ist, um den die Abweisrolle 12 mit senkrecht zum Boden gerichteter Drehachse rotierbar aufgesetzt ist.

Zum anderen ist gemäß gezeichnetem Beispiel eine weitere Abweisrolle 12a zwischen zwei von der Rückseite des Chassis 2 (entgegengesetzt der Fahrtrichtung 17) senkrecht vorspringenden, parallelen Konsolen 15 drehbar gelagert gehalten. Diese sind an ihren Enden von einer gemeinsamen Drehachse 16 senkrecht zum Boden durchsetzt, um welche die Abweisrolle 12a beim Auftreffen und Abwälzen auf einem externen Hindernis rotiert werden kann. Die Drehlagerung jeder der Abweisrollen 12, 12a ist dergestalt, daß ein Teil ihrer gekrümmten Flächen gegenüber der Seite des Chassis 2, die parallel zur Fahrtrichtung 17 verläuft, vorspringt und so externe Hindernisse vor deren Berührung mit der Chassis-Seite tangieren und abweisen kann. Entsprechend können von den drei Umlenkrädern 8 auch die beiden jeweils äußeren angeordnet sein, so daß auch sie zur Seitendruckaufnahme gegenüber der Fahrtrichtung 17 ausbildet sind.

## Patentansprüche

1. Mähvorrichtung, insbesondere Sichelmäher, ankuppelbar an ein Fahrzeug, mit einem das Schneidwerk umgebenden, über ein oder mehrere Bodenräder (7) abgestützten Chassis (2), und mit einem oder mehreren, frei drehbaren Rädern (8), die an der Chassis-Frontseite in Fahrtrichtung (17) vorspringend, mit zum Boden gerichteten Drehachsen (10) angebracht sind, dadurch **gekennzeichnet**, daß das eine Rad oder die Räder (8) von vorzugsweise luftgefüllten Gummireifen umgeben sind und das eine Bodenrad oder die Bodenräder (7) um mit den Drehachsen (10) der Räder (8) gemeinsame oder parallele Achsen lenkbar (18) angeordnet sind.

2. Mähvorrichtung nach Anspruch 1, dadurch gekennzeichnet, daß die Räder (8) an über das Chassis vorzugsweise in Fahrtrichtung (17) hinausragenden Auslegern (6) gelagert sind.

3. Mähvorrichtung nach Anspruch 2, dadurch gekennzeichnet, daß ein oder mehrere Bodenräder (7) jeweils an einem der Ausleger (6) aufgehängt (11) sind.

4. Mähvorrichtung nach einem der vorhergehenden Ansprüche, gekennzeichnet durch eine Stoßstange beziehungsweise einen Rammbügel (13), der an einer Chassis-Außenseite federgepuffert (13a) befestigt ist und einen oder mehrere Rollkörper (12) mit zum Boden gerichteten Drehachsen (14) trägt.

5. Mähvorrichtung nach einem der vorhergehenden Ansprüche, gekennzeichnet durch einen oder mehrere von dem und/oder über das Chassis hinausragende Kragarme oder Konsolen (15), welche vorzugsweise paarweise einen Rollkörper (12a) mit zum Boden gerichteter Drehachse (16) tragen und von dessen Drehachse (16) gegebenenfalls gemeinsam durchsetzt sind.

6. Mähvorrichtung nach einem der vorhergehenden Ansprüche, dadurch gekennzeichnet, daß an der Chassis-Rückseite ein Kupplungsgerät (1) zur Befestigung an einer Dreipunktaufhängung eines Nutzfahrzeugs vorgesehen ist.

## Claims

1. A mower device, more especially a sickle mower, couplable to a vehicle, with a chassis (2) surrounding the cutting mechanism and supported by way of one or more ground wheels (7), and with one or more freely rotatable wheels (8) that are arranged to project from the front side of the chassis in the travelling direction (17) with rotary axes (10) directed towards the ground, characterised in that the one or more wheels (8) are encircled by preferably air filled rubber tyres and that the one or more ground wheels (7) are pivotably (18) arranged about axes that coincide with the rotary axes (10) of the wheels (8) or are parallel thereto.

2. A mower device according to claim 1, characterised in that the wheels (8) are mounted on outriggers (6) extending from the chassis preferably in the travelling direction (17).

3. A mower device according to claim 2, characterised in that one or more ground wheels (7) are each suspended (11) from one of the outriggers (6).

4. A mower device according to one of the preceding claims, characterised by a push rod or thrust stirrup (13) that is secured on an outer side of the chassis with spring cushioning (13a) and carries one or more roll members (12) with rotary axes (14) directed towards the ground.

5. A mower device according to one of the preceding claims, characterised by one or more cantilever arms or brackets (15) which carry, preferably in pairs, a roll member (12a) with a rotary axis (16) directed towards the ground, and which is, or, as necessary, are together penetrated by the rotary axis (16) of the latter.

6. A mower device according to one of the preceding claims, characterised in that a coupling device (1) is provided on the rear side of the chassis for securing to a three-point suspension of a vehicle with which it is to be used.

## Revendications

1. Dispositif faucheur, en particulier faucheuse, susceptible d'être attelé à un véhicule, avec un châssis (2) entourant le mécanisme de coupe, et soutenu par l'intermédiaire d'une ou de plusieurs roues d'appui au sol (7), et avec une ou plusieurs roues (8) susceptibles de tourner librement, qui sont montées sur le côté avant du châssis, en faisant saillie dans la direction de déplacement, avec des axes de rotation (10) orientés en direction du sol, caractérisé en ce que l'une des roues ou les roues (8) sont entourées par des bandages en caoutchouc, de préférence remplis d'air et l'une des roues d'appui au sol ou les roues d'appui au sol (7) sont disposées de façon à pouvoir être orientées directionnellement (18) autour d'axes communs avec les axes de rotation (10) des roues (8)ou parallèles à ceux-ci.

2. Dispositif faucheur selon la revendication 1, caractérisé en ce que les roues (8) sont montées sur des bras (6) faisant saillie au-delà du châssis, de préférence dans la direction de déplacement (17).

3. Dispositif faucheur selon la revendication 2, caractérisé en ce qu'une ou plusieurs roues d'appui au sol (7) sont chacune suspendues (en 11) à l'un des bras (6).

4. Dispositif faucheur selon l'une des revendications précédentes, caractérisé par un pare-chocs, respectivement une traverse-tampon (13), qui est fixé, en étant amorti élastiquement (13a), sur un côté extérieur du châssis et qui porte un ou plusieurs corps de roulement (12) ayant des axes de rotation (14) orientés en direction du sol.

5. Dispositif faucheur selon l'une des revendications précédentes, caractérisé par un ou plusieurs bras en porte-à-faux ou consoles (15), faisant saillie du et/ou au-delà du châssis, qui portent, de préférence par paires, un corps (12a) de roulement ayant un axe de rotation (16) orienté en direction du sol et sont traversés, le cas échéant conjointement, par son axe de rotation (16).

6. Dispositif faucheur selon l'une des revendications précédentes, caractérisé en ce que, sur le côté arrière du châssis, est prévu un dispositif d'attelage (1) pour la fixation à une suspension trois points d'un véhicule de servitude.
